# EUROPÄISCHE PATENTSCHRIFT

(11) **EP 1 676 153 B1**
(45) Veröffentlichungstag und Bekanntmachung des Hinweises auf die Patenterteilung: **07.03.2007**
(21) Anmeldenummer: 04790490.9
(22) Anmeldetag: 15.10.2004
(51) Int. Cl.: G01V 1/26, G04G 7/02

(54) **ZEITGENAUE DURCHFÜHRUNG EINER MESS- ODER STEUERAKTION SOWIE SYNCHRONISATION MEHRERER SOLCHER AKTIONEN**
TEMPORALLY PRECISE EXECUTION OF A MEASURING OR CONTROL ACTION, AND SYNCHRONISATION OF A PLURALITY OF SUCH ACTIONS
MISE EN OEUVRE EXACTE EN TEMPS D 'UNE ACTION DE MESURE OU DE COMMANDE ET SYNCHRONISATION DE PLUSIEURS ACTIONS

(30) Priorität: 21.10.2003 DE 10349476
(43) Veröffentlichungstag der Anmeldung: 05.07.2006
(73) Patentinhaber: SIEMENS AKTIENGESELLSCHAFT, 80333 München (DE)
(72) Erfinder: MAIER, Rupert, 91330 Eggolsheim (DE); SYKOSCH, Ralf, 91365 Weilersbach (DE); FOLTYN, Roman, 90607 Rückersdorf (DE)
(86) Internationale Anmeldenummer: PCT/EP2004/011649
(87) Internationale Veröffentlichungsnummer: WO 2005/043193

(56) Entgegenhaltungen:
- WO-A-03/012480
- US-A- 5 440 313
- US-A- 5 629 626
- US-A- 5 650 981
- US-A- 5 978 313
- US-B1- 6 191 587
- PATENT ABSTRACTS OF JAPAN Bd. 2002, Nr. 09, 4. September 2002 (2002-09-04) & JP 2002 148372 A (HAKUSAN KOGYO KK), 22. Mai 2002 (2002-05-22)

## Beschreibung

Die Erfindung bezieht sich auf ein Verfahren zur Durchführung einer Mess- oder Steueraktion sowie auf ein Steuergerät zur Ausführung dieses Verfahrens. Die Erfindung bezieht sich weiterhin auf ein Verfahren zur Synchronisation mehrerer Mess- und/oder Steueraktionen.

Als Messaktion wird ein Vorgang bezeichnet, bei welchem mittels eines Messgeräts Daten erhoben sowie gespeichert oder weitergeleitet werden. Als Steueraktion wird noch allgemeiner ein Vorgang bezeichnet, im Zuge dessen ein technisches Gerät zu irgendeiner Aktion, z.B. eine Bewegung, ein elektrischer Schaltprozess, etc. veranlasst wird.

Eine solche Mess- oder Steueraktion umfasst in der Regel eine Kaskade von einzelnen Schaltvorgängen wie beispielsweise das Anschalten einer Betriebsspannung, Aktivieren oder Deaktivieren eines Messkanals, Einlesen und Auslesen eines Speicherregisters, Veranlassen eines Datentransfers o.dergl.

Eine Vorrichtung, die eine Mess- oder Steueraktion eines technischen Geräts (insbesondere Messgeräts) auslöst oder veranlasst, wird als Steuergerät bezeichnet.

Als synchron werden zwei Aktionen bezeichnet, wenn der Ablauf beider Aktionen von der selben Zeitskala bestimmt ist. Im Sinne der obigen Definition müssen zwei synchrone Aktionen also nicht notwendigerweise gleichzeitig ablaufen. Wesentlich ist vielmehr, dass zwischen jedem Moment der ersten Aktion und jedem Moment der zweiten Aktion eine wohldefinierte und bestimmbare zeitliche Korrelation besteht.

Es ist in der Praxis häufig erforderlich, eine Aktion zu einem bestimmten, exakt vorgegebenen Zeitpunkt durchzuführen oder zumindestens den Zeitpunkt, zu dem eine Aktion durchgeführt wird, exakt zu kennen. Dieses Erfordernis besteht vor allem dann, wenn mehrere, insbesondere in großem räumlichen Abstand voneinander angeordnete Geräte in enger zeitlicher Koordination zusammenarbeiten. Ein Beispiel hierfür sind seismographische Messverfahren.

Bei einem solchen Verfahren wird üblicherweise mittels einer Vielzahl räumlich verteilter Erschütterungssensoren die Ausbreitung einer Schock- oder Druckwelle im Boden aufgenommen. Durch Vergleich der von verschiedenen Sensoren aufgenommenen Erschütterungsmuster ist es möglich, den Ort einer Erschütterungsquelle zu lokalisieren (z.B. Erdbebendetektion) oder durch Erzeugung künstlicher Erschütterungen Rückschlüsse über die Bodenstruktur zu gewinnen (seismographische Bodenuntersuchung). Die Aussagekraft eines solchen Untersuchungsverfahrens hängt maßgeblich davon ab, wie präzise die Erschütterungsmuster der einzelnen Sensoren miteinander zeitlich korreliert werden können. Hierfür ist es erforderlich, dass die von verschiedenen Sensoren durchgeführten Messaktionen in höchstem Maße synchron ablaufen.

Vergleichbare Anforderungen an die Synchronisation von Messaktionen bestehen auch bei akustischen Messverfahren (Echolot etc.) sowie bei Untersuchungen des Schwingungsverhaltens einer mechanischen Konstruktion.

Es ist üblich, eine Mess- oder Steueraktion durch eine Uhr zu "triggern", d.h. zu einem bestimmten Zeitpunkt auszulösen. Werden verschiedene Aktionen durch unabhängige Uhren getriggert, so sind diese Aktionen infolge des durch die Ungenauigkeit der Uhren verursachten Zeitunterschieds nur in beschränktem Maße synchron. Die Synchronität kann verbessert werden, indem die Uhren z.B. durch GPS-Signale oder Funkuhr-Signale abgeglichen werden.

Die Patentschrift US5650981 offenbart ein Verfahren und ein System zur Synchronisation von Aktionen zwischen Mess- oder Steuergeräten auf mehreren Schiffen, bei denen ein von einem Empfänger anhand eines Zeitreferenzsignals zeitlich periodisches Synchronisationssignal erzeugt wird.

Eine Zeitungenauigkeit, und damit verbunden ein Verlust an Synchronität, entsteht auch dadurch, dass eine Mess- oder Steueraktion in aller Regel kein zeitlich punktförmiger Vorgang ist, sondern infolge der Mehrzahl vorzunehmender Schaltvorgänge eine gewisse Zeitspanne in Anspruch nimmt. Die eigentliche Messung oder Ansteuerung findet daher zumeist nicht direkt bei Ausgabe eines Triggerbefehls statt, sondern zu einem späteren Zeitpunkt, der mit dem Trigger-Zeitpunkt nur vergleichsweise ungenau zeitlich korreliert ist.

Der Erfindung liegt die Aufgabe zugrunde, ein Verfahren anzugeben, das auf einfache Weise eine besonders zeitgenaue Durchführung einer Mess- oder Steueraktion ermöglicht. Insbesondere soll auch ein geeignetes Steuergerät zur Durchführung dieses Verfahrens angegeben werden. Der Erfindung liegt weiterhin die Aufgabe zugrunde, ein Verfahren zur besonders präzisen Synchronisation zweier Mess- und Steueraktionen anzugeben.

Bezüglich des Verfahrens zur Durchführung einer Mess- oder Steueraktion wird die Aufgabe erfindungsgemäß gelöst durch die Merkmale des Anspruchs 1. Bezüglich des zugehörigen Steuergeräts wird die Aufgabe erfindungsgemäß gelöst durch die Merkmale des Anspruchs 7.

Danach ist ein Empfänger vorgesehen, mit dem ein Zeitreferenzsignal empfangen und anhand des Zeitreferenzsignals ein zeitlich periodisches Synchronisationssignal erzeugt wird. Als Zeitreferenzsignal kann ein beliebiges Signal herangezogen werden, aus welchem eine Zeitskala ableitbar ist. Dieses Signal kann künstlichen Ursprungs sein, insbesondere ein GPS-Signal oder ein Funkuhrsignal- Als Zeitreferenzsignal kann aber auch ein natürliches signal herangezogen werden. Beispielsweise wäre es bei Anwendung des erfindungsgemäßen Verfahrens im Weltraum denkbar, den regelmäßig gepulsten Radiowellenausstoß eines Pulsars als Zeitreferenzsignal heranzuziehen. Das Steuergerät umfasst weiterhin einen Taktgeber, durch welchen eine Schaltfrequenz erzeugt wird.

Das Synchronisationssignal und die Schaltfrequenz werden nun in einem Impulsteiler derart verknüpft, dass die Periode des Synchronisationssignals in eine Anzahl von Schaltintervalle unterteilt wird. Durch diese Schaltintervalle wird eine Ablaufsteuerung für die Mess- oder Steueraktion getaktet. Das bedeutet, dass eine hinterlegte Sequenz von Schaltbefehlen intervallweise abgearbeitet wird, so dass jedem Schaltintervall ein Schaltbefehl zugeordnet wird, der an das die Aktion durchführende Gerät ausgegeben wird und somit zum Zeitpunkt des Schaltintervalls einen entsprechenden Schaltvorgang der Aktion auslöst. Der Schaltbefehl kann insbesondere auch ein Leerbefehl sein, durch welchen kein expliziter Schaltvorgang ausgelöst wird, so dass der Status quo für die Dauer des zugeordneten Schaltintervalls aufrechterhalten wird.

Indem erfindungsgemäß das aus einer externen Zeitreferenz gewonnene Synchronisations signal nach Unterteilung in Schaltintervalle direkt zur Ablaufsteuerung der Mess- oder Steueraktion herangezogen wird, wird eine besonders hohe Zeitauflösung erreicht. Ein entscheidender Vorteil des Verfahrens und des zugehörigen Steuergeräts liegt darin, dass jedem Schaltvorgang der Aktion über das zugewiesene Schaltintervall ein im Rahmen der Genauigkeit der Zeitreferenz exakter Zeitpunkt zugeordnet ist. Hierdurch kann der Zeitpunkt einer Messung oder Ansteuerung und deren gesamter Verlauf mit höchster Präzision bestimmt werden.

Bevorzugt ist der Empfänger ein GPS-Empfänger, der das weltweit empfangbare GPS-Signal aufnimmt. Solche Empfänger sind in vielfältigen Variationen kommerziell erhältlich. Als Synchronisationssignal wird hierbei zweckmäßigerweise das PPS (Puls pro Sekunde)-Signal herangezogen, das ein GPS-Empfänger häufig standardmäßig mit einer Präzision von bis zu ca. +/- 60 nsec ausgibt.

Zur Erhöhung der Präzision des Synchronisationssignals wird dieses bevorzugt vorlaufend durch einen Korrekturwert korrigiert. Allgemein enthält ein solcher Korrekturwert Informationen über den momentanen Zeitfehler des Synchronisationssignals. Dieser Fehler wird vor allem durch die endliche Laufzeit des Zeitreferenzsignals oder des Synchronisationssignals (infolge der endlichen Leitungslänge, etc.) sowie durch Ablenkungs-, Reflexions- oder Echoeffekte verursacht.

Ein GPS-Empfänger gibt geeignete Korrekturinformationen, aus denen ein solcher Korrekturwert (PFST-Wert) bezogen werden kann, häufig standardmäßig aus. Sowohl das PPS-Signal als auch der PFST-Wert sind in dem so genannten NMEA(National Marine Electronics Association)-Protokollstandard beschrieben. Das NMEA-Protokoll wird von vielen handelsüblichen GPS-Empfängern zur Datenausgabe verwendet. Durch Korrektur des PPS-Signals mit dem PFST-Wert lässt sich die Genauigkeit des PPS-Signals auf bis zu ca. +/- 10 psec erhöhen.

Als im Hinblick auf das Zeit-Präzisions-verhältnis vorteilhafter Taktgeber wird bevorzugt ein Schwinquarz, insbesondere mit einer Zeitabweichung von At/t ≤ 10 psec/sec hinsichtlich der Schaltfrequenz verwendet.

Um das Steuergerät und das mit diesem durchzuführende Verfahren flexibel für eine Vielzahl verschiedener Mess- und Steueraktionen verwenden zu können, ist bevorzugt vorgesehen, dass die im Steuergerät hinterlegte Sequenz von Schaltbefehlen speicherprogrammierbar vorgegeben werden kann und somit an den jeweiligen Bedarf anpassbar ist.

Bezüglich eines Verfahrens zur Synchronisation mehrerer Mess- und/oder Steueraktionen wird die Aufgabe erfindungsgemäß gelöst durch die Merkmale des Anspruchs 5.

Danach ist vorgesehen, dass jede der zu synchronisierenden Aktionen mittels des vorstehend beschriebenen Durchführungsverfahrens vollzogen wird. Zur Synchronisation der Aktionen reicht es dann aus, der Durchführung jeder Aktion ein gemeinsames Zeitreferenzsignal zugrunde zu legen. Sollen beispielsweise mehrere Messungen an unterschiedlichen Orten mittels des erfindungsgemäßen Durchfünruhgsverfanrens oder des zugehörigen Steuergeräts ausgelöst werden, so sind diese Messungen automatisch synchronisiert, wenn alle Empfänger ihre Zeitreferenz aus dem GPS-Signal beziehen.

Nachfolgend wird ein Ausführungsbeispiel der Erfindung anhand einer Zeichnung näher erläutert. Darin zeigen:
- FIG 1: schematisch eine seismographische Messeinrichtung mit einer Anzahl von Messstationen,
- FIG 2: schematisch eine ein Steuergerät und ein Messgerät umfassende Messstation gemäß FIG 1 und
- FIG 3: ein vereinfachtes Funktionsschema des Steuergeräts gemäß FIG 2.

Einander entsprechende Teile und Größen sind in den Figuren stets mit dem selben Bezugszeichen versehen.

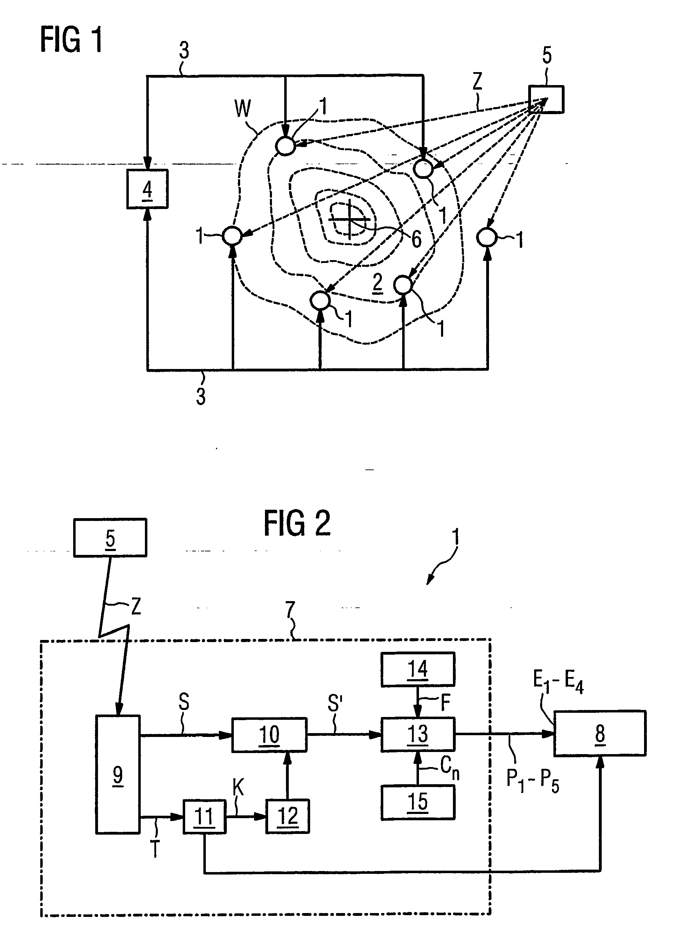

In FIG 1 ist schematisch eine seismographische Messeinrichtung dargestellt. Diese Einrichtung umfasst eine Anzahl von Messstationen 1, die räumlich auf ein Messgebiet 2 verteilt angeordnet sind. Jede Messstation 1 ist über eine Datenübertragungsstrecke 3, die als Datenleitung oder drahtlose Übertragungsstrecke ausgebildet sein kann, mit einer Zentraleinheit 4 verbunden. In der Zentraleinheit 4 werden die von jeder Messstation 1 erhobenen Messdaten gesammelt und ausgewertet.

Jede Messstation 1 erhält ein Zeitreferenzsignal Z von einer Zeitreferenzquelle 5. Bei der Zeitreferenzquelle 5 handelt es sich um ein System mehrerer GPS-Satelliten. Da das GPS-Signal weltweit zu empfangen ist, können die Messstationen 1 beliebig über die Erdoberfläche verteilt sein.

Schematisch in FIG 1 angedeutet ist ein Erschütterungszentrum 6, von dem aus sich eine Schockwelle W oder Erschütterungswelle im Boden ausbreitet. Das Erschütterungszentrum 6 ist beispielsweise das Epizentrum eines Erdbebens, der Ort einer Explosion, o.dergl. Das von der Schockwelle W verursachte lokale Erschütterungsmuster wird von jeder Messstation 1 aufgenommen und an die Zentraleinheit 4 übermittelt. Durch Analyse der verschiedenen lokalen Erschütterungsmuster kann dann anhand des Laufzeitunterschieds der Schockwelle W die geographische Position des Erschütterungszentrums 6 bestimmt werden. Um eine Fehlabschätzung der Position des Erschütterungszentrums 6 zu vermeiden, müssen die von den Messstationen 1 ermittelten lokalen Erschütterungsmuster zeitlich mit höchster Präzision miteinander korreliert werden.

Der Aufbau einer jeden Messstation 1 ist in einem schematischen Blockschaltbild in FIG 2 dargestellt. Danach umfasst die Messstation 1 ein Steuergerät 7 und ein Messgerät 8. Das Steuergerät 7 übernimmt die Ablaufsteuerung der Messung. Die eigentliche Messung, d.h. die Erhebung der Messdaten, wird dagegen von dem Messgerät 8 durchgeführt. Bei dem Messgerät 8 handelt es sich um einen Analog/Digital-Wandler oder ein analoges Messgerät. Im Allgemeinen, d.h. von dem beschriebenen Ausführungsbeispiel losgelöst, kann anstelle des Messgeräts 8 ein beliebiges technisches Gerät, insbesondere ein Schalter, ein Antrieb, ein Ventil etc. an das Steuergerät 7 angeschlossen sein.

Das Steuergerät 7 umfasst einen Empfänger 9, der zur Aufnahme des GPS-Signals als Zeitreferenzsignal Z geeignet ist. Der Empfänger 9 gibt ein so genanntes PPS(Puls pro Sekunde)-Signal aus, das als Synchronisationssignal S einer Korrektureinheit 10 zugeleitet wird. Das PPS-Signal enthält Sekundenpulse mit einer Genauigkeit von ca. 60 nsec. Der Empfänger 9 gibt weiterhin ein Telegramm T an eine Recheneinheit 11 aus. Das Telegramm T ist ein Komplex von Daten, der u.a. Information über die geographische Position des Empfängers 9, die absolute ortszeit, sowie einen so genannten PFST-Wert enthält. Der PFST-Wert enthält Informationen darüber, um welche Zeitspanne ein Sekundenpuls des PPS-Signals infolge einer Bahnabweichung eines GBS-Satelliten oder infolge anderer Störeinflüsse wie Witterung, Verdeckung durch ein Flugzeug oder Leitungslängen am Empfänger 9 verfälscht ist.

Der PFST-Wert wird als Korrekturwert K einem Schieberegister 12 zugeleitet. Das Schieberegister 12 bestimmt anhand des Korrekturwerts K eine zeitlich variable Verzögerungszeit V, um welche das Synchronisationssignal S in der Korrektureinheit 10 verzögert wird. Die Korrektureinheit gibt ein durch diese Verzögerungszeit V korrigiertes Synchronisationssignal S' aus, dessen Sekundenpulse mit einer Genauigkeit von +/- 10 psec erfolgen. Dieses korigierte Synchronisationssignal S' wird einem Impulsteiler 13 zugeführt.

Dem Impulsteiler 13 wird weiterhin die von einem Schwingquarz 14 als Taktgeber erzeugte Schaltfrequenz F zugeführt. Die Zeitabweichung der Schaltfrequenz F ist durch Auswahl eines entsprechend präzisen schwingquarzes auf Δt/t ≤ 10 psec/sec festgelegt.

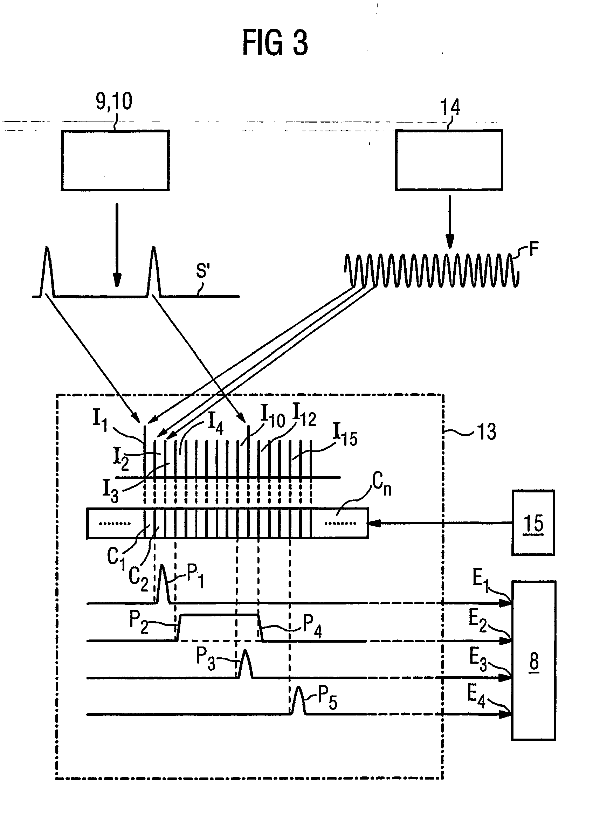

In dem Impulsteiler 13 wird das Synchronisationssignal S', wie auch aus dem in FIG 3 dargestellten Funktionsschema hervorgeht, anhand der Schaltfrequenz F in eine Anzahl von gleichförmigen Schaltintervallen Iₙ (n=1,2,3,...) unterteilt. Die Schaltfrequenz F liegt in dem für einen Schwingquarz typischen MHz-Frequenzbereich, so dass die Anzahl der Schaltintervalle Iₙ zwischen 10⁶ und 10⁸ pro Sekunde liegt.

Mit dem Ablauf der Schaltintervalle In wird nun intervallweise eine in einem Speichermodul 15 hinterlegte Sequenz von Schaltbefehlen Cₙ (n=1,2,3,...) abgearbeitet. Eine solche Frequenz von Schaltbefehlen Cₙ ist z.B. in der folgenden Weise kodifizierbar:
"-"
"Messkanal 1 aktivieren"
"-"
"Betriebsspannung einschalten"
"-"
"-"
"-"
"-"
"-"
"Messwert in Register lesen"
"-"
"Betriebsspannung ausschalten"
"-"
"-"
"Messwert aus Register auslesen"
"-"

Diese beispielhafte Befehlssequenz ist in dem Funktionsschema gemäß FIG 3 bildhaft umgesetzt. Jeder Schaltbefehl Cₙ wird in Form eines geeigneten Steuersignals P₁ bis P₅ über einen zugehörigen Steuereingang E₁ bis E₄ dem Messgerät 8 zugeleitet und löst dort einen entsprechenden Schaltvorgang des Messgeräts 8 aus.

So wird entsprechend dem Schaltbefehl "Messkanal 1 aktivieren" während des Schaltintervalls I₂ das Steuersignal P₁ auf den Steuereingang E₁ gegeben, und hierdurch der entsprechende Messkanal des Messgeräts 8 aktiviert.

Auf gleiche Weise werden durch Beschaltung des Steuereingangs E₂ während des Schaltintervalls I₄ die Betriebsspannung mittels des Steuersignals P₂ eingeschaltet sowie während des Schaltintervalls I₁₂ durch das Steuersignal P₄ wieder abgeschaltet. Zum Laden und Auslesen eines speicherregisters des Messgeräts 8 werden entsprechend im Schaltintervall I₁₀ das Steuersignal P₃ auf den Steuereingang E₃ und während des Schaltintervalls I₁₅ das Steuersignal P₅ auf den Steuereingang E₄ gegeben. Der Schaltbefehl "-" steht für einen Leerbefehl, durch welchen keine unmittelbare Reaktion des Messgeräts 8 hervorgerufen wird. Er dient somit zur Überbrückung von Schaltpausen und zur zeitgenauen Positionierung der übrigen Schaltvorgänge.

Wie aus FIG 3 zu erkennen ist, ist somit jedem Schaltbefehl Cₙ, und darüber jedem Schaltvorgang einer Mess- oder Steueraktion ein Schaltintervall Iₙ zugewiesen. Der Beginn dieses Schaltintervalls Iₙ ist mit der Genauigkeit des Synchronisationspulses S' plus der Genauigkeit der Schaltfrequenz F pro Periode des Synchronisationssignals S' bestimmbar. Der Zeitpunkt eines jeden Schaltvorgangs des Messgerätes 8 während einer Mess- oder Steueraktion ist somit mit einer Genauigkeit von +/- 20 psec bestimmbar.

Zumal jeder Messstation 1 der in FIG 1 dargestellten Messeinrichtung ein gleich präzises Steuergerät 7 zugeordnet ist und zumal alle Messstationen 1 auf das gleiche Zeitreferenzsignal Z zugreifen, sind damit die einzelnen Messungen der Messstationen 1 mit einer Genauigkeit von +/- 20 psec synchronisiert.

Die im Speichermodul 15 hinterlegte Sequenz von Schaltbefehlen Cₙ ist beliebig programmierbar. Das Steuergerät 7 ist dadurch einfach an eine Vielzahl von Mess- und Steueraktionen und an eine Vielzahl anzusteuernder Geräte anpassbar.

## Patentansprüche

1. Verfahren zur Durchführung einer Mess- oder Steueraktion, bei dem ein von einem Empfänger (9) anhand eines Zeitreferenzsignals (Z) erzeugtes zeitlich periodisches Synchronisationssignal (S,S') mittels einer von einem Taktgeber (14) erzeugten Schaltfrequenz (F) in eine Anzahl von Schaltintervallen (Iₙ) unterteilt wird, wobei jedem Schaltintervall (Iₙ) ein Schaltbefehl (Cₙ) zugeordnet wird, durch welchen ein zugehöriger Schaltvorgang der Aktion ausgelöst wird.

2. Verfahren nach Anspruch 1, **dadurch gekennzeichnet, dass** als Empfänger (9) ein GPS-Empfänger herangezogen wird, und dass als Synchronisationssignal (S,S`) das von dem Empfänger (9) ausgegebene PPS-Signal herangezogen wird.

3. Verfahren nach Anspruch 1 oder 2, **dadurch gekennzeichnet, dass** als Taktgeber (14) ein Schwingquarz herangezogen wird.

4. Verfahren nach einem der Ansprüche 1 bis 3, **dadurch gekennzeichnet, dass** das Synchronisationssignal (S) fortlaufend durch-einen Korrekturwert (K) korrigiert wird.

5. Verfahren zur Synchronisation mehrerer Mess- und/oder Steueraktionen, wobei anhand eines gemeinsamen Zeitreferenzsignals (Z) jede Mess- oder Steueraktion mittels eines Verfahrens nach einem der Ansprüche 1 bis 4 durchgeführt wird.

6. Verfahren nach Anspruch 5, **dadurch gekennzeichnet, dass** als Zeitreferenzsignal (Z) das GPS-Signal herangezogen wird.

7. Steuergerät (7) zur Durchführung des Verfahrens nach einem der Ansprüche 1 bis 4, mit einem Empfänger (9), der zur Erzeugung eines zeitlich periodischen Synchronisationssignals (S,S') anhand eines Zeitreferenzsignals (Z) ausgebildet ist, mit einem Taktgeber (14), der zur Erzeugung einer Schaltfrequenz (F) ausgebildet ist und mit einem Impulsteiler (13), der dazu ausgebildet ist, das Synchronisationssignal (S,S') anhand der Schaltfrequenz (F) in eine Anzahl von Schaltintervallen (Iₙ) zu unterteilen, jedem Schaltintervall (Iₙ) einen Schaltbefehl (Cₙ) zuzuordnen und zur Auslösung eines zugehörigen Schaltvorgangs an ein die Aktion ausführendes Gerät (8) auszugeben.

8. Steuergerät (7) nach Anspruch 7, **dadurch gekennzeichnet, dass** dem Impulsteiler (13) eine Sequenz von Schaltbefehlen (Cₙ) speicherprogrammierbar vorgebbar ist.

## Claims

1. Method of executing a measurement or control action, wherein a temporally periodic synchronization signal (S, S') generated by a receiver (9) based on a timing reference signal (Z) is divided by a switching frequency (F) generated by a timing generator (14) into a plurality of switching intervals (Iₙ), wherein a switching command (Cₙ) is associated to each switching interval (Iₙ), with switching command (Cₙ) triggering an associated switching process of the action.

2. Method according to claim 1, **characterized in that** the receiver (9) comprises a GPS receiver, and that the PPS signal outputted by the receiver (9) is used as the synchronization signal (S, S').

3. Method according to claim 1 or 2, **characterized in that** the timing generator (14) comprises a quartz oscillator.

4. Method according to one of the claims 1 to 3, **characterized in that** the synchronization signal (S) is continuously corrected by a correction value (K).

5. Method for synchronizing several measurement and/or control actions, with each measurement or control action being executed by a method according to one of the claims 1 to 4 based on a common timing reference signal (Z).

6. Method according to claim 5, **characterized in that** the GPS signal is used as the timing reference signal (Z).

7. Controller (7) for carrying out the method according to one of the claims 1 to 4, comprising a receiver (9) configured to generate a temporally periodic synchronization signal (S, S') based on a timing reference signal (Z), a timing generator (14) configured to generate a switching frequency (F), and a pulse divider (13) configured to divide the synchronization signal (S, S') into a plurality of switching intervals (Iₙ) based on the switching frequency (F), to associate a switching command (Cₙ) to each switching interval (Iₙ), and to output the switching command (Cₙ) to a device (8) for triggering a corresponding switching process and executing the action.

8. Controller (7) according to claim 7, **characterized in that** a sequence of switching commands (Cₙ) is supplied to the pulse divider (13) by stored program control.

## Revendications

1. Procédé de mise en oeuvre d'une action de mesure ou de commande, dans lequel un signal de synchronisation (S, S') temporellement périodique et produit par un récepteur (9) à l'aide d'un signal de référence temporel (Z) est divisé au moyen d'une fréquence de commutation (F) produite par un générateur d'horloge (14) en un certain nombre d'intervalles de commutation (Iₙ), une instruction de commutation (Cₙ) par laquelle est déclenchée une opération de commutation associée de l'action étant associée à chaque intervalle de commutation (Iₙ).

2. Procédé selon la revendication 1, **caractérisé par le fait que** l'on exploite comme récepteur (9) un récepteur GPS et que l'on exploite comme signal de synchronisation (S, S') le signal PPS fourni par le récepteur (9).

3. Procédé selon la revendication 1 ou 2, **caractérisé par le fait que** l'on exploite comme générateur d'horloge (14) un cristal oscillateur.

4. Procédé selon l'une des revendications 1 à 3, **caractérisé par le fait que** l'on corrige continuellement le signal de synchronisation (S) avec une valeur correctrice (K).

5. Procédé de synchronisation de plusieurs actions de mesure et/ou de commande, chaque action de mesure ou de commande étant mise en oeuvre à l'aide d'un signal de référence temporel commun (Z) au moyen d'un procédé selon l'une des revendications 1 à 4.

6. Procédé selon la revendication 5, **caractérisé par le fait que** l'on exploite comme signal de référence temporel (Z) le signal GPS.

7. Appareil de commande (7) pour la mise en oeuvre du procédé selon l'une des revendications 1 à 4, avec un récepteur (9) qui est conçu pour produire un signal de synchronisation temporellement périodique (S, S') à l'aide d'un signal de référence temporel (Z), avec un générateur d'horloge (14) qui est conçu pour produire une fréquence de commutation (F) et avec un diviseur d'impulsions (13) qui est conçu pour diviser le signal de synchronisation (S, S') à l'aide de la fréquence de commutation (F) en un certain nombre d'intervalles de commutation (Iₙ), pour associer à chaque intervalle de commutation (Iₙ) une instruction de commutation (Cₙ) et pour fournir celle-ci à un appareil (8) exécutant l'action afin de déclencher une opération de commutation associée.

8. Appareil de commande (7) selon la revendication 7, **caractérisé par le fait qu'**une séquence d'instructions de commutation (Cₙ) peut être prescrite par un programme en mémoire au diviseur d'impulsions (13).
